(19) Europäisches Patentamt
European Patent Office
Office européen des brevets

(11) **EP 2 139 826 B1**

(12) **FASCICULE DE BREVET EUROPEEN**

(45) Date de publication et mention
de la délivrance du brevet:
**13.03.2013 Bulletin 2013/11**

(51) Int Cl.:
**C04B 35/107** (2006.01)     **C03B 5/237** (2006.01)

(21) Numéro de dépôt: **08805687.4**

(22) Date de dépôt: **22.04.2008**

(86) Numéro de dépôt international:
**PCT/FR2008/050732**

(87) Numéro de publication internationale:
**WO 2008/145924 (04.12.2008 Gazette 2008/49)**

(54) **PRODUIT REFRACTAIRE POUR ELEMENT D'EMPILAGE D'UN REGENERATEUR D'UN FOUR VERRIER**

FEUERFESTES PRODUKT FÜR EIN PRÜFARBEITSELEMENT EINES GLASOFEN-REGENERATORS

REFRACTORY PRODUCT FOR A CHECKER WORK ELEMENT OF A GLASS FURNACE REGENERATOR

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **23.04.2007   FR 0754635**

(43) Date de publication de la demande:
**06.01.2010  Bulletin 2010/01**

(73) Titulaire: **Saint-Gobain Centre de Recherches et d'Etudes**
**Européen**
**92400 Courbevoie (FR)**

(72) Inventeurs:
• **CABODI, Isabelle**
  **F-84300 Cavaillon (FR)**
• **GAUBIL, Michel**
  **F-30133 Les Angles (FR)**

(74) Mandataire: **Tanty, François**
**Cabinet Nony**
**3, rue de Penthièvre**
**75008 Paris (FR)**

(56) Documents cités:
**EP-A- 0 354 844     US-A- 5 028 572**

**Description**

**Domaine technique**

L'invention concerne un produit réfractaire fondu et coulé à forte teneur en alumine ainsi que l'utilisation de ce produit comme élément pour la construction d'empilages de régénérateurs, notamment dans des empilages de régénérateurs de fours verriers.

**Arrière-plan technologique**

Parmi les produits réfractaires, on distingue les produits fondus et coulés et les produits frittés.
Les produits frittés sont obtenus par mélange de matières premières appropriées puis mise en forme à cru de ce mélange et cuisson de la forme crue résultante à une température et pendant un temps suffisants pour obtenir le frittage de cette forme crue.
Les problèmes rencontrés dans leurs applications respectives par les produits frittés et par les produits fondus et coulés, et les solutions techniques adoptées pour les résoudre, sont généralement différents. Par ailleurs, du fait des différences importantes entre les procédés de fabrication, une composition mise au point pour fabriquer un produit fritté n'est pas *a priori* utilisable telle quelle pour fabriquer un produit fondu et coulé et réciproquement.
Les produits fondus et coulés, parfois appelés « produits électrofondus », sont obtenus par fusion d'un mélange de matières premières appropriées dans un four à arc électrique ou par toute autre technique adaptée à ces produits. Le liquide fondu est ensuite coulé dans un moule, puis le produit obtenu subit un refroidissement contrôlé.
La plupart des fours de verrerie dits « à flammes », c'est-à-dire ayant comme source d'énergie des brûleurs à gaz ou à fuel, sont équipés de régénérateurs. Ces régénérateurs sont une succession de chambres garnies d'éléments céramiques formant un empilage et permettant de récupérer et restituer de la chaleur selon les cycles. En général, les gaz chauds ou les fumées qui proviennent du four en fonctionnement entrent dans l'empilage par la partie haute du régénérateur et libèrent leur énergie calorifique dans l'empilage. Pendant ce temps, de l'air froid est amené en bas d'un autre empilage chauffé au cours du cycle précédent pour récupérer l'énergie calorifique ; cet air sort chaud en haut de l'empilage d'où il est conduit jusqu'aux brûleurs du four pour assurer la combustion du carburant dans les meilleures conditions. Les éléments qui constituent l'empilage subissent ce fonctionnement alternatif et doivent avoir une très bonne résistance aux chocs thermiques.
Les formes des éléments céramiques constituant l'empilage sont variées et sont par exemple décrites dans les brevets FR 2 142 624, FR 2 248 748 et FR 2 635 372.
La composition des produits fondus et coulés utilisés pour réaliser les éléments des empilages est généralement du type AZS (Alumine-Zircone-Silice) ou du type alumineux.
Les produits contenant de fortes teneurs en alumine, dits « produits alumineux » sont connus pour avoir la meilleure résistance aux hautes températures et sont donc principalement utilisés dans les parties hautes des empilages.
Cependant, on constate actuellement une évolution importante des conditions de fonctionnement des fours de verrerie. A titre d'exemple, on peut citer l'utilisation de plus en plus fréquente de combustibles gazeux en substitution aux combustibles liquides de type fuel, en particulier dans les fours de fusion de verre pour les écrans de télévision. Par ailleurs, les fours de fusion de verre sodocalcique évoluent vers des conditions de fonctionnement plus réductrices. Ces évolutions dans la conduite des fours rendent les fumées plus agressives vis-à-vis des produits réfractaires situés dans les régénérateurs. En particulier, un phénomène de corrosion des parties basses des empilages est observé suite à des dépôts par condensation d'espèces alcalines spécifiques au fonctionnement sous atmosphère réductrice (notamment NaOH, KOH sous forme libre...). Face à ce type de sollicitations, les produits réfractaires actuels alumineux ou du type AZS n'offrent pas une résistance suffisante.
On connaît par ailleurs du brevet US 2 019 208, déposé le 16 décembre 1933, des produits réfractaires alumine-magnésie comportant entre 2 et 10 % de magnésie et présentant une bonne capacité de résistance aux variations thermiques. Mais ces produits posent des problèmes de faisabilité industrielle.
La société SEPR fabrique et commercialise en outre le produit ER5312RX qui contient environ 87,5 % de $Al_2O_3$, 4,5 % de $Na_2O$ et 8 % de MgO. L'analyse cristallographique du ER5312RX révèle majoritairement de l'alumine bêta tierce. Alors que ce produit présente une excellente résistance à la corrosion par les vapeurs alcalines, il serait intéressant d'encore améliorer son comportement dans certaines conditions de fonctionnement très exigeantes, en particulier en atmosphères réductrices, c'est-à-dire contenant un excès de CO, et alcalines, c'est-à-dire contenant NaOH vapeur.
FR 2 853 897 décrit des produits réfractaires alumineux fondus et coulés contenant 0,4 à 2,5% de magnésie. Ces produits offrent une résistance améliorée à la corrosion par les espèces alcalines mais leur comportement reste insatisfaisant dans certaines conditions, en particulier en atmosphères réductrices, c'est-à-dire contenant un excès de CO, et alcalines, c'est-à-dire contenant NaOH vapeur.

Il existe donc un besoin pour un nouveau produit réfractaire fondu et coulé ayant une résistance accrue à la corrosion par les condensats alcalins, et plus particulièrement aux condensats du type NaOH libre, et présentant une bonne résistance aux variations thermiques.

La présente invention vise à satisfaire ce besoin.

**Résumé de l'invention**

Plus particulièrement, elle concerne un produit réfractaire fondu et coulé constitué par un monolithe présentant une masse supérieure à 1 kg ayant composition chimique pondérale moyenne suivante, en pourcentages en masse sur la base des oxydes :

25 % < MgO < 30 %
70 % < $Al_2O_3$ < 75 %

autres espèces : < 1 %

Comme on le verra plus en détail dans la suite de la description, les produits réfractaires selon l'invention possèdent une grande résistance à la corrosion alcaline et aux chocs thermiques. Ils sont donc parfaitement adaptés à une utilisation dans un régénérateur de four verrier fonctionnant dans des conditions réductrices, en particulier pour constituer des éléments d'empilage.

De préférence, le produit selon l'invention comporte encore une ou plusieurs des caractéristiques optionnelles suivantes :

- les « autres espèces » sont les impuretés, notamment $Na_2O$, CaO, $SiO_2$ et $Fe_2O_3$;
- les oxydes représentent plus de 99,9% de la masse du produit, de préférence environ 100% de la masse du produit ;
- la teneur en $Al_2O_3$ est telle que 70,5 % < $Al_2O_3$ et/ou $Al_2O_3$ < 74 % ou $Al_2O_3$ < 73 %;
- la teneur en MgO est telle que 26 % < MgO, ou 27,5 % < MgO et/ou MgO < 29 %;
- la teneur en $SiO_2$ est telle que $SiO_2$ < 0,5 %, de préférence $SiO_2 \leq 0,2$ %, voire $SiO_2 \leq 0,15$ % ;
- la teneur en CaO est telle que CaO < 0,6 %, de préférence CaO $\leq$ 0,4 %;
- une teneur en $Na_2O$ est telle que $Na_2O$ < 0,4 %, ou $Na_2O \leq 0,2$ % ;
- la porosité totale est supérieure à 10%, de préférence supérieure à 15%, et/ou inférieure à 30 %, de préférence inférieure à 25 % ;
- la porosité du produit est constituée par des pores, au moins une partie, de préférence sensiblement la totalité, desdits pores étant de forme tubulaire ;
- lesdits pores tubulaires présentent une orientation privilégiée ;
- l'orientation privilégiée des pores tubulaires est selon une direction sensiblement perpendiculaire au front de solidification (ou parallèle à la direction d'avancement du front de solidification) ; Dans le cas de produits présentant des branches dont l'épaisseur est réduite par rapport à la longueur et la hauteur, les pores tubulaires au sein des branches présentent ainsi une orientation privilégiée suivant une direction perpendiculaire aux faces latérales des branches, qui sont de préférence destinées à être en contact avec les écoulements de gaz ;
- le diamètre des pores tubulaires varie de 1 à 5 millimètres, en particulier, le cas échéant, dans les branches du produit ;
- plus de 80% en nombre des pores tubulaires ont un diamètre inférieur à 2 millimètres ;
- le produit comporte plus de 97% en masse de spinelle ;
- ledit spinelle se présente, de préférence, sous forme de cristaux de spinelle colonnaires ;
- lesdits cristaux de spinelle colonnaires présentent une orientation privilégiée ;
- l'orientation privilégiée des cristaux est selon une direction sensiblement perpendiculaire au front de solidification ;
- la taille des cristaux de spinelle, en particulier en dehors de la peau, est supérieure à 0,1 millimètre et peut atteindre 15 millimètres ;
- la taille des cristaux de spinelle est d'autant plus grande que l'on s'éloigne de la peau du produit, c'est-à-dire de sa surface extérieure ;
- le produit comporte au moins trois branches ;
- le produit comporte une pluralité de branches dont la hauteur (h) est comprise entre 100 et 600 mm et/ou la longueur (l) est comprise entre 10 et 600 mm et/ou l'épaisseur (e) est comprise entre 15 et 60 mm, de préférence entre 20 et 50 mm, la hauteur et/ou la longueur et/ou l'épaisseur pouvant être différente selon la branche considérée ;
- les pores sont répartis de manière homogène dans les branches du produit ;
- le produit de l'invention est cruciforme ;
- le produit présente une masse supérieure à 5 kg.
- le produit est fabriqué à partir d'un moule nécessairement en plusieurs parties ;
- au moins une partie des surfaces du produit de l'invention destinées à être disposées à l'interface avec des gaz chauds ou des fumées, de préférence toutes lesdites surfaces, présentent des obstacles, ou « corrugations ».

L'invention concerne également un procédé de fabrication d'un produit réfractaire selon l'invention, comprenant les étapes successives suivantes :

a) mélange de matières premières de manière à former une charge de départ,
b) fusion de ladite charge de départ jusqu'à obtention d'une matière en fusion,
c) coulage et solidification de ladite matière en fusion, par refroidissement, de manière à obtenir un produit réfractaire,

ce procédé étant remarquable en ce que lesdites matières premières sont choisies de manière que ledit produit réfractaire soit conforme à l'invention.

De préférence, on ajoute systématiquement et méthodiquement les oxydes MgO et $Al_2O_3$, de manière à garantir les teneurs exigées pour obtenir un produit selon l'invention.

De préférence, le bain de matière en fusion est brassé, en particulier sous l'action d'un arc électrique ou par barbotage d'un gaz oxydant, avec d'être versé dans le moule.

L'invention concerne encore l'utilisation d'un produit réfractaire selon l'invention dans un régénérateur, notamment dans un régénérateur d'un four verrier, et plus particulièrement comme élément d'empilage d'un empilage de tels régénérateurs. De préférence, le produit selon l'invention est utilisé comme élément de la partie dudit empilage par laquelle les gaz ou fumées refroidis sortent de l'empilage et/ou par laquelle de l'air à réchauffer entre dans ledit empilage. De préférence, le produit est utilisé comme élément de la partie basse dudit empilage.

En particulier, l'invention concerne l'utilisation d'un produit réfractaire selon l'invention comme élément d'empilage d'un régénérateur associé à un four de fusion de verre sodocalcique fonctionnant dans des conditions réductrices.

## Brève description des figures

D'autres caractéristiques et avantages de l'invention apparaîtront encore à la lecture de la description qui va suivre et à l'examen du dessin annexé dans lequel

- les figures 1 et 2 représentent, en perspective, des exemples de produits réfractaires selon l'invention ;
- la figure 3 représente une photographie prise au microscope optique (Reichert Polyvar 2) d'une coupe transversale, suivant le plan P3 représenté sur la figure 1, à mi-hauteur, de la peau (à droite sur la figure 3) vers le coeur, d'un produit réfractaire selon l'invention, la longueur de chaque trait blanc vertical correspondant à 500 microns ; et
- la figure 4 représente une photographie d'une coupe longitudinale, suivant le plan P1 représenté sur la figure 1, d'un produit réfractaire selon l'invention, la coupe passant par les deux branches $10_1$ et $10_3$ et l'âme centrale 12, ainsi qu'un détail de cette photographie.

## Définitions

Par « corrosion alcaline », on entend la corrosion résultant de la condensation de gaz alcalins. A titre d'exemple, on peut citer la corrosion due aux fumées issues de la fusion de verre sodo-potassique qui, lorsque la teneur en soufre dans les fumées est faible et/ou que les conditions sont réductrices, donnent lieu à un phénomène de condensation d'espèces telles que NaOH ou KOH en partie basse des empilages. En effet, l'absence de soufre ou des conditions réductrices empêchent la formation d'espèces telles que $Na_2SO_4$ ou $K_2SO_4$. Un phénomène de corrosion en phase liquide des produits réfractaires est alors constaté.

Par « impuretés », on entend les constituants inévitables, introduits nécessairement avec les matières premières ou résultant de réactions avec ces constituants. Les impuretés ne sont pas des constituants nécessaires, mais seulement tolérés.

On appelle « taille d'un pore » sa dimension maximale. La taille des pores se mesure par analyse d'images de la surface des produits.

La « taille » des cristaux est définie par leur plus grande dimension mesurée dans le plan d'observation d'une section polie.

On appelle « partie basse » d'un empilage de régénérateur les 5 à 15 étages inférieurs, c'est-à-dire les plus bas, d'un empilage. Généralement, on considère que la partie basse est constituée par les 10 étages inférieurs de l'empilage.

On appelle « peau » la partie externe du produit qui est en contact avec le moule et qui s'étend sur environ 250 $\mu$m d'épaisseur.

Une « matière en fusion » est une masse liquide. Cette masse liquide peut contenir quelques particules solides, mais en une quantité insuffisante pour qu'elles puissent structurer ladite masse. Généralement, la quantité de particules solides (germination hétérogène est inférieure à 5% en masse, le plus souvent inférieure à 2% en masse.

Sauf mention contraire, les pourcentages utilisés ici, dans la description et les revendications, se réfèrent toujours à des pourcentages en masse sur la base des oxydes.

**Description détaillée d'un mode de réalisation**

La fabrication d'un produit selon l'invention est possible suivant les procédés habituellement employés pour fabriquer les matériaux céramiques réfractaires fondus et coulés. Les procédés décrits dans FR 1 208 577 ou FR 2 058 527, incorporés par référence, sont applicables. En particulier, le procédé peut comporter les étapes a) à c) ci-dessus.

A l'étape a), les matières premières sont choisies de manière à garantir les teneurs en oxydes dans le produit fini conforme à l'invention.

A l'étape b), la fusion est de préférence réalisée grâce à l'action combinée d'un arc électrique assez long, ne produisant pas de réduction, et d'un brassage favorisant la réoxydation des produits.

Pour minimiser la formation de nodules d'aspect métallique et éviter la formation de fentes ou fendillements dans le produit final, il est préférable d'opérer la fusion dans des conditions oxydantes.

Préférentiellement, on utilise un procédé de fusion par arc électrique, par exemple le procédé de fusion à l'arc long décrit dans le brevet français n° 1 208 577 et ses additions n° 75893 et 82310, incorporés par référence.

Ce procédé consiste à utiliser un four à arc électrique dont l'arc jaillit entre la charge et au moins une électrode écartée de cette charge et à régler la longueur de l'arc pour que son action réductrice soit réduite au minimum, tout en maintenant une atmosphère oxydante au-dessus du bain de matière en fusion et en brassant ledit bain, soit par l'action de l'arc lui-même, soit en faisant barboter dans le bain un gaz oxydant (air ou oxygène, par exemple).

Le bain de matière en fusion est versé, de préférence en une unique opération de versement, dans le moule. L'opération de versement dure de préférence moins de 30 secondes, de préférence moins de 20 secondes, notamment pour fabriquer des éléments d'empilage de régénérateur. Sensiblement toute la matière en fusion versée dans le moule, généralement au moins 90%, voire au moins 95% en masse, est ainsi encore en fusion à la fin de l'opération de versement.

De préférence, le moule est en métal, de préférence refroidi, de manière à obtenir une vitesse de solidification élevée et un fort gradient thermique entre le coeur et la surface extérieure du produit.

Le versement d'un bain de matière en fusion permet avantageusement de fabriquer des formes complexes, la matière en fusion liquide pouvant remplir des renfoncements, destinés par exemple à la création de corrugations ou de reliefs à la surface du produit fini. Le versement d'un bain de matière en fusion permet également de fabriquer des produits à plusieurs branches.

La faible viscosité de la matière en fusion lui permet de bien remplir le moule, en s'infiltrant parfaitement dans toutes les anfractuosités ou renfoncements du moule. Il est ainsi avantageusement possible de créer des reliefs de petites dimensions, de manière fiable. La forme du produit est en outre nette.

Un bain de matière en fusion permet encore de fabriquer des produits présentant une faible porosité, typiquement inférieure à 30 %, de préférence inférieure à 25 %.

Le versement d'un bain de matière en fusion permet également d'utiliser des moules présentant au moins un profil en coupe différent d'un profil évasé ou à évasement nul. En particulier, il permet d'utiliser des moules interdisant une sortie du produit solide par l'ouverture du moule par laquelle la matière en fusion y a été introduit, c'est-à-dire des moules nécessairement en plusieurs parties.

De préférence, le moule est en plusieurs parties. Avantageusement, un tel permet la création de reliefs et de renfoncements à la surface du produit fini, et avantageusement encore, sur l'une quelconque des faces, voire sur toutes les faces du produit fini.

A l'étape c), le produit peut être démoulé avant solidification complète de la matière en fusion introduite dans le moule. Avantageusement, le refroidissement et la solidification peuvent alors se poursuivre de manière plus uniforme, éventuellement dans une arche de recuisson.

De préférence, le démoulage est effectué moins de 1 heure, de préférence moins de 30 minutes, de préférence moins de 5 minutes, après versement de la matière en fusion dans le moule.

En particulier, dans un plan de coupe transversal, le front de solidification présente de préférence un contour dont la forme est sensiblement identique à celle du contour extérieur du produit, notamment en périphérie du produit. Par exemple, pour un produit cruciforme, le front de solidification présente de préférence une forme également cruciforme dans un plan de coupe transversal.

Un refroidissement rapide dans le moule puis un démoulage rapide avant solidification complète, de préférence moins de 5 minutes après versement de la matière en fusion dans le moule, conduisent avantageusement, en particulier dans le cas de produits à plusieurs branches comme définis ci-dessus, à la formation de cristaux colonnaires présentant une orientation privilégiée selon une direction sensiblement perpendiculaire au front de solidification.

De préférence, le moule utilisé présente une empreinte de forme complémentaire à celle du produit que l'on souhaite fabriquer. Le produit fabriqué est ainsi monolithique, c'est-à-dire qu'il est constitué en une seule pièce fondue, sans collage, ni découpe, ni assemblage.

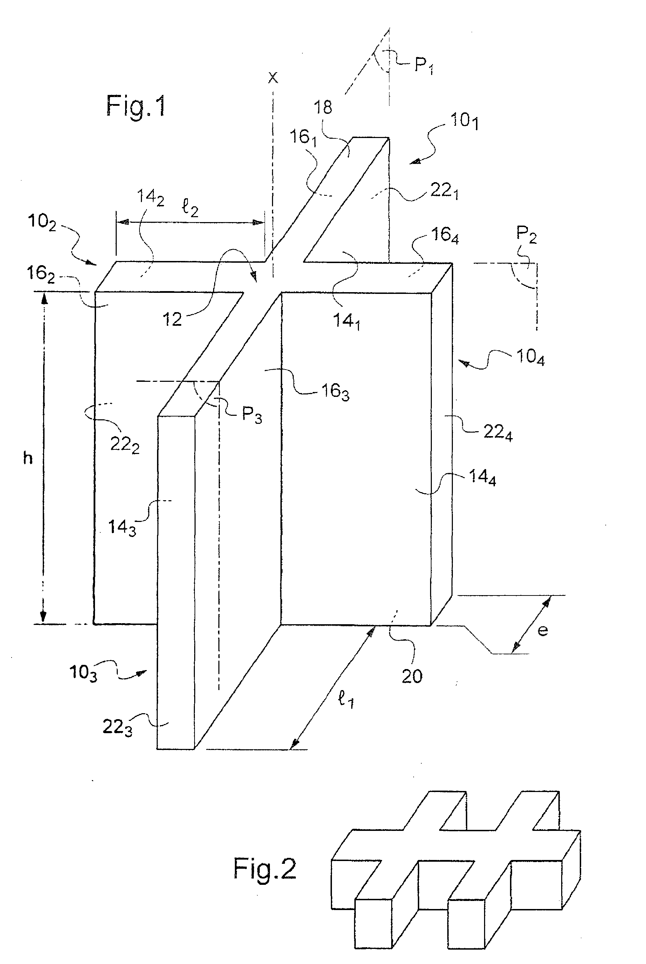

Comme représenté sur la figure 1, le produit selon l'invention peut être cruciforme, c'est-à-dire comporter quatre branches ou « ailes » $10_1$, $10_2$, $10_3$ et $10_4$.

De préférence, les quatre branches $10_1$, $10_2$, $10_3$ et $10_4$ rayonnent à partir d'une âme centrale 12 d'axe X, de préférence en formant deux à deux des angles droits, les branches $10_1$ et $10_3$ s'étendant selon un plan P1 et les branches $10_2$ et $10_4$ s'étendant selon un plan P2 orthogonal au plan P1.

Dans la suite de la description, l'indice i est utilisé pour désigner de manière générique les parties correspondantes des quatre branches $10_i$ : $10_1$, $10_2$, $10_3$ et $10_4$.

De préférence, chaque branche présente une forme générale en parallélépipède rectangle. Les faces latérales $14_i$ et $16_i$ des branches destinées à être disposées à l'interface avec les écoulements de fluide gazeux traversant le régénérateur sont de préférence sensiblement parallèles à l'axe X.

La longueur « I » des branches peut varier entre 10 et 600 mm et peut être variable selon les branches. En particulier, la longueur « $I_1$ » des branches $10_1$ et $10_3$ s'étendant selon le plan P1 peut être différente de la longueur « $I_2$ » des branches $10_2$ et $10_4$ s'étendant selon le plan P2. La longueur « $I_2$ » est de préférence supérieure à 1,5 fois la longueur « $I_1$ » et/ou inférieure à 3 fois, voire inférieure à 2,5 fois la longueur « $I_1$ ». En particulier, le rapport entre la longueur « $I_2$ » et la longueur « $I_1$ » peut être d'environ 2.

La forme cruciforme décrite ci-dessus s'est avérée particulièrement avantageuse pour faciliter les opérations de montage de l'empilage, mais aussi pour assurer une bonne stabilité statique de cet empilage.

Dans un mode de réalisation non représenté, les faces latérales $14_i$ et $16_i$ des différentes branches sont pourvues d'obstacles ou « corrugations », de préférence du type de ceux décrits EP 0 354 844, incorporé par référence. Avantageusement, ces obstacles permettent d'intensifier les échanges entre les produits réfractaires selon l'invention et les gaz circulant dans le régénérateur.

La hauteur « h » des branches est de préférence la même quelle que soit la branche considérée. Elle est de préférence comprise entre 100 et 600 mm.

De même, l'épaisseur « e » des branches est de préférence identique quelle que soit la branche considérée. De préférence l'épaisseur « e » est supérieure à 15 mm, de préférence supérieure à 20 mm et/ou inférieure à 60 mm, de préférence inférieure à 50 mm.

De préférence, les surfaces supérieures 18 et inférieures 20 du produit selon l'invention sont sensiblement parallèles et perpendiculaires aux faces latérales $14_i$ et $16_i$, et, de préférence encore, sont sensiblement perpendiculaires aux faces d'extrémité $22_i$ des branches $10_i$.

Bien que la forme cruciforme décrite ci-dessus soit préférée, l'invention n'est pas limitée à cette forme. En particulier, le produit selon l'invention peut présenter une forme « double cruciforme » comme représenté sur la figure 2. Cette forme correspond à la jonction par des faces d'extrémité $22_i$ de deux produits cruciformes tels que celui représenté sur la figure 1. De préférence, un tel produit est cependant obtenu par moulage dans un moule présentant une empreinte double cruciforme.

D'autres formes sont encore envisageables. En particulier, le produit selon l'invention peut être sous une forme tubulaire, les côtés du produit définissant, dans une coupe transversale, c'est-à-dire dans un plan perpendiculaire à la direction d'écoulement des gaz, une forme par exemple carrée, pentagonale, hexagonale, ou octogonale. L'épaisseur, en coupe transversale, est de préférence sensiblement constante le long d'un côté du produit.

De préférence, le rapport h/e de la hauteur sur l'épaisseur d'au moins un côté, de préférence de tous les côtés du produit et/ou d'au moins une branche, de préférence de toutes les branches, est supérieur à 5, de préférence supérieur à 8, de préférence encore supérieur à 10.

De préférence encore, le rapport I/e de la longueur sur l'épaisseur d'au moins un côté, de préférence de tous les côtés du produit et/ou d'au moins une branche, de préférence de toutes les branches, est supérieur à 2, de préférence supérieur à 3.

Le tableau 1 suivant récapitule les résultats d'essais. Les produits testés, non limitatifs, sont donnés dans le but d'illustrer l'invention.

Les matières premières suivantes ont été utilisées :

- l'alumine de type AC44 commercialisée par la société Pechiney et contenant en moyenne 99,5 % d'$Al_2O_3$, ($Na_2O$ : 3700 ppm, $SiO_2$ : 100 ppm, CaO : 160 ppm, $Fe_2O_3$ : 120 ppm),
- l'alumine de type AR75 commercialisée par la société Pechiney et contenant en moyenne 99,4 % d'$Al_2O_3$, ($Na_2O$ : 2700 ppm, $SiO_2$ : 100 ppm, CaO : 160 ppm, $Fe_2O_3$ : 110 ppm),
- la magnésie NEDMAG 99 contenant plus de 99 % de MgO, commercialisée par la société Nedmag Industries.

Les mélanges de matières premières ont été fondus selon un procédé classique de fusion en four à arc, tel que décrit par exemple dans FR 1 208 577 ou dans FR 2 058 527, puis coulés dans un moule (par exemple selon le procédé décrit dans FR 2 088 185) pour obtenir des pièces de type X4, pouvant servir comme éléments de régénérateur.

Ces pièces ont une forme cruciforme à quatre branches, chaque branche ayant une hauteur de 420 mm, une longueur de 130 mm, et une épaisseur 30 mm.

L'analyse chimique moyenne des produits obtenus est donnée dans le tableau 1 en pourcentages en masse sur la base des oxydes.

Par « autres », on désigne toutes les espèces autres que $Al_2O_3$, $MgO$, $SiO_2$, $Na_2O$, $CaO$ et $ZrO_2$.

La pièce de l'exemple 1 du tableau 1 est le produit ER1882RX, fabriqué et commercialisé par la société SEPR. Il contient environ 50 % d'$Al_2O_3$, 32,0 % de $ZiO_2$ et 15,6 % de $SiO_2$. Son analyse cristallographique révèle environ 47 % de corindon, 21 % de phase vitreuse et 32 % de zircone. La pièce de l'exemple 2 du tableau 1. est le produit ER5312RX cité dans le préambule de la description. L'exemple 3 contient 97,6% d'$Al_2O_3$, 1,7% de $MgO$ et 0,5% de $SiO_2$. Son analyse cristallographique révèle environ 6% de spinelle, 1% de phase vitreuse et 93% de corindon.

Tableau 1

| Pièce | $Al_2O_3$ + « autres » | MgO | $SiO_2$ | $Na_2O$ | CaO | $ZrO_2$ | Nombre de défaut(s) | porosité | Test A | Test | Test C |
|---|---|---|---|---|---|---|---|---|---|---|---|
| 1* | 51,30 | 0,00 | 15,60 | 1,10 | | 32,0 | 0 | 14 | G, F | M | C |
| 2* | 87,50 | 7,5 | 0,5 | 4,5 | | | 0 | 14 | F | F | B |
| 3* | 97,6 | 1,7 | 0,5 | 0,2 | | | 0 | 20 | G | M | A |
| 4* | 75,2 | 24,6 | 0,18 | 0,17 | 0,22 | 0,05 | 1 | ND | G | ND | ND |
| 5 | 73,2 | 26,3 | 0,10 | 0,10 | 0,2 | <0,05 | 1 | 15 | A | ND | A |
| 6 | 72.4 | 27,5 | 0,13 | 0,15 | 0,24 | <0,02 | 0 | 16 | A | ND | A |
| 7* | 71,4 | 27,5 | 0,8 | 0,05 | 0,25 | 0,05 | 0 | ND | G | ND | B |
| 8 | 72,0 | 27,6 | 0,07 | 0,09 | 0,3 | 0,1 | 0 | 21 | A | A | A |
| 9 | 71,6 | 28,1 | <0,05 | <0,05 | 0,23 | 0,20 | 0 | 31 | A | A | A |
| 10 | 71,1 | 28,6 | <0,02 | <0,02 | 0,24 | 0,05 | 0 | 26 | A | ND | A |
| 11* | 70,1 | 28,9 | <0,02 | <0,02 | 0,24 | 0,05 | 0 | ND | A | A | A |
| 12 | 70,4 | 29,3 | <0,02 | 0,07 | 0,25 | 0,01 | 1 | 15 | A | ND | A |
| 13* | 70,2 | 29,5 | <0,02 | 0,06 | 0,25 | <0,01 | 1 | 18 | A | ND | A |
| 14* | 69,7 | 30,0 | <0,02 | 0.05 | 0,24 | <0,01 | 1 | 13 | A | ND | A |
| 15* | 68,7 | 31,0 | <0,02 | 0,03 | 0,26 | 0,05 | 5 | 34 | ND | ND | A |
| * : en dehors de l'invention | | | | | | | | | | | |

Pour chacun des exemples, on donne un indicateur de faisabilité en comptant le nombre de défauts (fissures et/ou coins cassés). La faisabilité est considérée comme acceptable si on observe un défaut ou moins.

Pour simuler l'application et l'atmosphère corrosive en présence d'un gradient thermique, des échantillons (dimensions 15x3px80mm sont extraits des pièces cruciforme puis évalués selon le test A suivant : Les échantillons sont disposés dans un four à flamme de trois mètres de long présentant sur cette longueur un gradient thermique allant de 1300°C (côté brûleur) à 700°C (côté cheminée d'extraction) visant à reproduire la variation entre le bas et le haut d'un empilage de régénérateur. Les échantillons sont placés dans la zone de condensation des espèces alcalines. Une solution alcaline contenant 10% (massique) de $Na_2SO_4$ est injectée en continu (un litre par heure) pour reproduire l'atmosphère alcaline.

La lettre donnée indique l'aspect visuel du produit après le test : G correspond à un gonflement (augmentation du volume de plus de 5%) de l'échantillon, F correspond à l'apparition de fissures et A indique une absence de gonflement ou de fissure et correspond donc à un bon comportement. ND signifie « non déterminé », et correspond aux échantillons n'ayant pas subi le test A.

L'aptitude aux variations thermiques d'un échantillon est déterminée à l'aide du test B qui consiste à faire subir 50 cycles thermiques aux échantillons ayant déjà subi le test A. Chaque cycle comporte une montée de température depuis 900 °C jusqu'à 1 350 °C, puis un retour à 900 °C. La lettre donnée indique l'aspect visuel du produit après le test : M indique un morcellement de l'échantillon, F correspond à la présence de fissures et A indique une absence de fissure et correspond donc à un bon comportement. ND signifie « non déterminé » et correspond aux échantillons n'ayant pas subi le test B.

La résistance à la corrosion des pièces en utilisation extrême et/ou à très long terme est déterminée par trempe d'échantillons (dimensions 15x15x100mm) dans de la soude pure NaOH liquide à 980°C (test C). La lettre donnée indique l'aspect visuel du produit après 20 minutes d'essai : A correspond à un échantillon intact, B indique un début de dégradation et C correspond à une déstructuration complète du matériau.

Le tableau 1 permet de faire les constats suivants :

Lorsque la teneur en magnésie (MgO) est supérieure à 30%, la faisabilité n'est plus assurée. Ceci est probablement dû à la formation de phase Périclase (Magnésie libre). La faisabilité est particulièrement bonne pour des teneurs en magnésie comprises entre 27,5% et 29%.

On observe également (exemple 4*) que lorsque la teneur en magnésie est inférieure à 26%, la résistance au test A est nettement dégradée. Cette dégradation est probablement due à une teneur moindre en spinelle au profit de corindon libre qui, à l'utilisation, peut se dégrader plus rapidement.

Les produits de l'invention sont les seuls à présenter un bon comportement lors des tests A et C.

Sans être lié par cette théorie, le comportement remarquable des produits selon l'invention pourrait s'expliquer par une faible conductivité ionique, associée à la présence d'une quantité élevée de cristaux de spinelle. Les cristaux de spinelle seraient en effet plus faiblement transformés chimiquement que les cristaux de corindon. De plus, la forme des cristaux (cristaux colonnaires) ainsi que l'arrangement même des cristaux (cristaux imbriqués) au sein des pièces induiraient une excellente cohésion de celles-ci, même après attaque chimique.

On observe également (exemple 7*) que la teneur des espèces autres que $Al_2O_3$ et MgO, en particulier la teneur en silice, doit être limitée car ces autres espèces conduisent à une dégradation des résultats aux tests A et C.

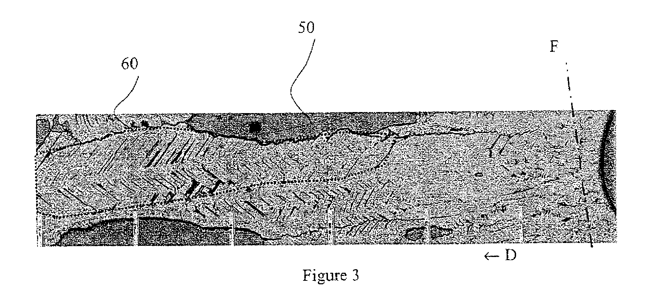

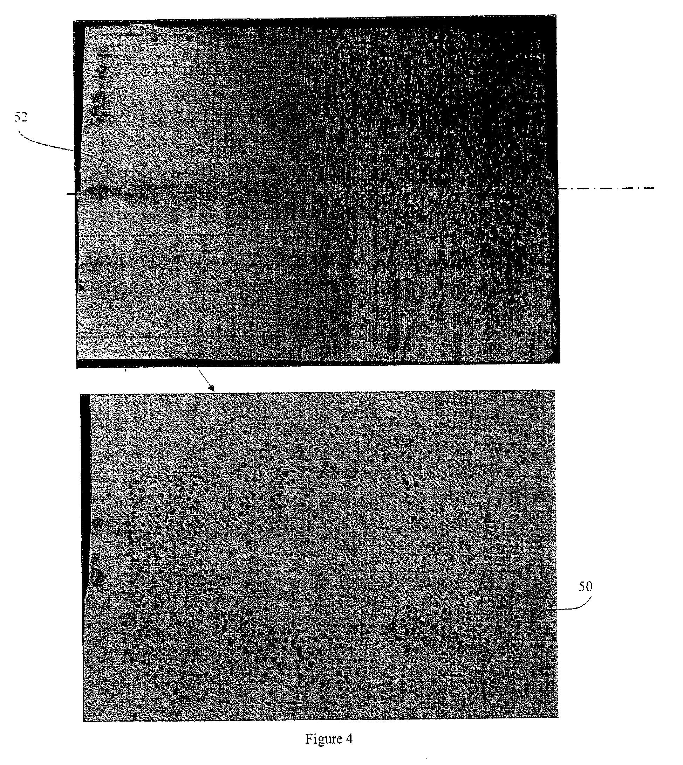

La pièce de l'exemple 8 a été sciée suivant les plans de coupe P1, à mi-épaisseur, et P3. Les photographies des figures 3 et 4 ont été prises sur ces coupes.

Les photographies montrent que le produit réfractaire présente une microstructure remarquable.

Comme représenté sur la figure 3, le produit comporte des pores 50 de forme allongée, dits « tubulaires », la porosité totale étant de préférence supérieure à 10% et inférieure à 25 %. Le diamètre des pores tubulaires varie de 1 à 5 millimètres dans les branches du produit, c'est-à-dire en dehors de la zone de rotassure 52 (qui s'étend sensiblement le long de l'axe X dans le cas d'un produit cruciforme tel que celui de la figure 1) et en dehors de la zone périphérique correspondant à la peau du produit. Plus de 80% en nombre des pores tubulaires ont un diamètre inférieur à 2 millimètres.

De manière surprenante, les pores tubulaires présentent une orientation privilégiée selon une direction sensiblement perpendiculaire à la direction générale F du front de solidification (et parallèle à la direction D d'avancement de ce front de solidification). Dans le cas de produits présentant des branches de faible épaisseur par rapport à la longueur et la hauteur, les pores tubulaires au sein des branches présentent ainsi une orientation privilégiée suivant une direction perpendiculaire aux faces latérales 16i des branches.

Comme cela apparaît sur la figure 4, les pores tubulaires sont répartis dans toute la masse des branches, sauf dans la zone de peau. Cette répartition est sensiblement homogène.

Par ailleurs, la figure 3 montre que le produit comporte des cristaux colonnaires 60 de spinelle. On observe que les cristaux de spinelle colonnaires présentent une orientation privilégiée et s'étendent suivant la même orientation privilégiée que les pores tubulaires 50, c'est-à-dire selon une direction sensiblement perpendiculaire à la direction générale F du front de solidification. La taille des cristaux de spinelle dans les branches, en dehors de la peau, est supérieure à 0,1 millimètre et peut atteindre 15 millimètres. La taille des cristaux de spinelle est d'autant plus grande que l'on s'éloigne de la surface extérieure du produit.

La figure 4 permet également de constater un bon remplissage, c'est-à-dire une absence de lacunes (une lacune étant un espace vide dont au moins une dimension est supérieure à 15 mm), au sein de la pièce.

De manière générale, les produits de l'invention présentent une porosité comprise entre 10 et 30 % répartie de manière quasi-uniforme dans la pièce. De préférence, la porosité est comprise entre 15 et 25%. Une porosité d'environ 20% est considérée comme optimale.

Le volume poreux et la répartition homogène de ce volume poreux permettent avantageusement aux produits selon l'invention de s'accommoder efficacement des variations de volume dues aux variations de température, même après avoir été soumis à des conditions de fonctionnement en atmosphère alcaline.

De manière générale, on observe également que les pores présentent des petites dimensions (de l'ordre de 1 à 5 mm de diamètre et de l'ordre de 1 mm pour la majorité des pores).

L'analyse cristallographique des produits de l'invention des exemples 6, 8 et 9 révèle plus de 97 % de spinelle $Al_2O_3$-MgO, les cristaux de spinelle présentant, en dehors de la peau, une taille comprise entre 100 $\mu$m et 15 mm.

L'exemple 13 est constitué majoritairement de spinelle ainsi que de traces d'une seconde phase (périclase). La présence de ces deux phases est néfaste à la faisabilité, leurs comportements étant différents pendant la phase de refroidissement et pouvant conduire à des fissurations.

La présence d'autres composés, autres que les impuretés inévitables, n'est pas souhaitable. En particulier, $Na_2O$, CaO, $B_2O_3$, $K_2O$, $Cr_2O_3$, $TiO_2$ et $ZrO_2$ doivent être évités. Leurs teneurs respectives doivent de préférence être inférieures à 0,05 %.

La présence d'oxyde de chrome en présence de vapeurs alcalines conduirait à la formation de chrome hexavalent particulièrement toxique. La présence d'oxyde de titane dans les matières premières conduirait à la formation d'une phase de titanate d'aluminium au détriment de la phase spinelle. Cette phase de titanate instable conduirait elle-même à un mauvais comportement vis-à-vis du cyclage thermique. La présence de zircone conduirait à une densification du produit et ne permettrait pas de maintenir le niveau de porosité souhaité pour les produits de l'invention.

Bien entendu, l'invention n'est pas limitée aux modes de réalisation décrits et représentés.

Par exemple, les surfaces d'un produit selon l'invention à l'interface avec les gaz peuvent présenter une pluralité d'obstacles à l'écoulement de ces gaz, mais aussi être sensiblement plans et s'étendre parallèlement à l'écoulement de ces gaz.

**Revendications**

1. Produit réfractaire fondu et coulé constitué par un monolithe présentant une masse supérieure à 1 kg et la composition chimique pondérale moyenne suivante, en pourcentages en masse sur la base des oxydes

$$25\ \% < MgO < 30\ \%$$

$$70\ \% < Al_2O_3 < 75\ \%$$

autres espèces que MgO et $Al_2O_3$ : < 1 %

2. Produit selon la revendication 1 comportant au moins 70,5 % d'alumine ($Al_2O_3$) et moins de 73 % d'alumine ($Al_2O_3$).

3. Produit selon l'une quelconque des revendications précédentes comportant au moins 27,5 % de magnésie (MgO) et moins de 29 % de magnésie (MgO).

4. Produit selon l'une quelconque des revendications précédentes comportant moins de 0,5 % de silice ($SiO_2$).

5. Produit selon l'une quelconque des revendications précédentes comportant une teneur en chaux (CaO) inférieure à 0,6 % et/ou une teneur en oxyde de sodium ($Na_2O$) inférieure à 0,4 %.

6. Produit selon l'une quelconque des revendications précédentes présentant une porosité totale supérieure à 10 % et inférieure à 30 %, la porosité du produit étant constituée, au moins en partie, par des pores de forme tubulaire.

7. Produit selon la revendication immédiatement précédente, le diamètre des pores tubulaires étant compris entre 1 et 5 mm et présentant une orientation privilégiée suivant une direction perpendiculaire au front de solidification.

8. Produit selon l'une quelconque des revendications précédentes comportant plus de 97 % en masse de spinelle ($Al_2O_3$-MgO), ledit spinelle se présentant sous forme de cristaux de spinelle colonnaires présentant une orientation privilégiée suivant une direction sensiblement perpendiculaire au front de solidification, la taille des cristaux de spinelle étant supérieure à 0,1 millimètres et inférieure à 15 millimètres.

9. Produit selon la revendication immédiatement précédente, dans lequel la taille des cristaux de spinelle est d'autant plus grande que l'on s'éloigne de la surface extérieure dudit produit.

10. Produit selon l'une quelconque des revendications précédentes comportant une pluralité de branches dent la hauteur (h) est comprise entre 100 et 600 mm et/ou la longueur (l) est comprise entre 10 et 600 mm et/ou l'épaisseur (e) est comprise entre 15 et 60 mm, le rapport h/e de la hauteur sur l'épaisseur d'au moins une branche étant supérieur à 5 et/ou le rapport l/e de la longueur sur l'épaisseur d'au moins une branche étant supérieur à 2.

11. Produit selon la revendication immédiatement précédente, les pores étant répartis de manière homogène dans les branches du produit.

**12.** Produit selon l'une quelconque des revendications précédentes, fabriqué par un procédé comportant une étape de coulage, dans un moule en plusieurs parties, d'un bain de matière en fusion.

**13.** Produit selon l'une quelconque des revendications précédentes, dans lequel :

$$26\ \% < MgO < 30\ \%$$

$$70\ \% < Al_2O_3 < 74\ \%$$

en pourcentages en masse sur la base des oxydes.

**14.** Utilisation d'un produit selon l'une quelconque des revendications précédentes dans un régénérateur d'un four, ou comme élément d'empilage d'une partie basse d'un empilage d'un régénérateur d'un four.

**15.** Utilisation selon la revendication immédiatement précédente dans laquelle ledit régénérateur est associé à un four de fusion de verre sodocalcique fonctionnant dans des conditions réductrices.

**Claims**

**1.** A fused cast refractory product constituted by a monolith having a weight greater than 1 kg and having the following mean chemical composition by weight, as percentages by weight based on the oxides:

- 

$$25\ \% < MgO < 30\ \%;$$

$$70\ \% < Al_2O_3 < 75\ \%;$$

- other species than MgO and $Al_2O_3$ : < 1%.

**2.** A product according to claim 1, including at least 70.5% of alumina ($Al_2O_3$) and less than 73% of alumina ($Al_2O_3$).

**3.** A product according to any one of the preceding claims, including at least 27.5% of magnesia (MgO) and less that 29% of magnesia. (MgO)

**4.** A product according to any one of the preceding claims, including less than 0.5% of silica ($SiO_2$).

**5.** A product according to any one of the preceding claims, including a lime (CaO) content of less than 0.6% and/or a sodium oxide ($Na_2O$) content of less than 0.4%.

**6.** A product according to any one of the preceding claims, having a total porosity of more than 10% and less than 30%, wherein at least a portion of the porosity of the product is constituted by pores which are tubular in shape.

**7.** A product according to the immediately preceding claim, wherein the tubular pore diameter is in the range 1 mm to 5 mm, and in which the tubular pores have a preferential orientation in a direction perpendicular to the solidification front.

**8.** A product according to any one of the preceding claims, comprising more than 97% by weight of spinel ($Al_2O_3$-MgO), wherein said spinel is in the form of columnar crystals of spinel with a preferential orientation in a direction substantially perpendicular to the solidification front, wherein the spinel crystal size is more than 0.1 mm and less than 15 mm.

**9.** A product according to the immediately preceding claim, in which the size of the spinel crystals increases with distance from the outer surface of said product.

10. A product according to any one of the preceding claims, comprising a plurality of branches of height (h) that is in the range 100 mm to 600 mm, and/or of length ($\ell$) that is in the range 10 mm to 600 mm, and/or of thickness (e) that is in the range 15 mm to 60 mm, in which the ratio h/e of the height to the thickness of at least one branch is greater than 5, and/or the ratio $\ell$/e of the length to the thickness of at least one branch is more than 2.

11. A product according to the immediately preceding claim, wherein the pores are distributed homogeneously in the branches of the product.

12. A product according to any one of the preceding claims, fabricated using a method including a step of casting a molten material into a mold in a plurality of parts.

13. A product according to any one of the preceding claims, in which:

$$26\% < MgO < 30\%$$

$$70\% < Al_2O_3 < 74\%$$

as percentages by weight based on the oxides.

14. Use of a product according to any one of the preceding claims in a regenerator of a furnace, or as a packing element for a lower portion of a packing of a regenerator of a furnace.

15. Use according to the immediately preceding claim, in which said regenerator is associated with a soda-lime glass furnace operating under reducing conditions.

**Patentansprüche**

1. Geschmolzenes und gegossenes Feuerfestprodukt welches durch einen Monolithen gebildet wird mit einer Masse größer als 1 Kg und der über das Gewicht gemittelten chemischen Zusammensetzung in Massenprozenten auf der Basis von Oxiden:

$$25\% < MgO < 30\%$$

$$70\% < Al_2O_3 < 75\%$$

sowie anderen Bestandteilen als MgO und $Al_2O_3$: < 1%

2. Produkt nach Anspruch 1, welches mindestens 70,5% Aluminiumoxyd ($Al_2O_3$) und weiniger als 73% Aluminiumoxyd ($Al_2O_3$) enthält.

3. Produkt nach einem der vorhergehenden Ansprüche, welches mindestens 27,5% Magnesia (MgO) und weniger als 29% Magnesia (MgO) enthält.

4. Produkt nach einem der vorhergehenden Ansprüche, welches mindestens 0,5% Siliciumdioxyd ($SiO_2$) enthält.

5. Produkt nach eine der vorhergehenden Absprüche, welches einen Kalkgehalt (CaO) kleiner als 0,6% und/oder einen Natriumdioxydgehalt ($Na_2O$) von weniger als 0,4% aufweist.

6. Produkt nach einem der vorhergehenden Ansprüche, welches eine Gesamtporosität von mehr als 10% und kleiner als 30% aufweist, wobei die Porosität des Produktes zumindest in Teilbereichen durch röhrenförmige Poren gebildet ist.

7. Produkt nach dem vorhergehenden Anspruch, bei dem der Durchmesser der röhrenförmigen Poren zwischen 1 und 5 mm beträgt und eine bevorzugte Orientierung aufweist, welche einer Richtung folgt, die senkrecht auf der Erstarrungsfront steht.

8. Produkt nach eine der vorhergehenden Ansprüche, welches in der Masse mehr als 97% Spinnelle ($Al_2O_3$-MgO) enthält, wobei die Spinnelle in Form von säulenförmigen Spinnelle-Kristallen gebildet ist, welche eine bevorzugte Orientierung aufweisen, welcher eine Richtung folgt, die in etwa senkrecht auf der Erstarrungsfront steht, und die Größe der Spinnelle- Kristalle größer als 0,1 mm und kleiner als 15 mm ist.

9. Produkt nach dem vorhergehenden Anspruch, in welchem die Größe der Spinnelle- Kristalle desto größer ist je weiter man von der äusseren Oberfläche des Produkts entfernt ist.

10. Produkt nach eine der vorhergehenden Ansprüche, welches eine Mehrzahl von Verzweigungen aufweist, deren Höhe (h) zwischen 100 und 600 liegt und/oder deren Länge (I) zwischen 10 und 600 mm und/oder deren Dicke (e) zwischen 15 und 60 mm liegt, wobei das Verhältnis h/e der Höhe zur Dicke mindestens einer Verzweigung größer als 5 und/oder das Verhältnis l/e der Länge zur Dicke mindestens einer Verzweigung größer als 2 ist.

11. Produkt nach dem vorhergehenden Anspruch, bei dem die Poren in den Verzweigungen des Produkts in homogener Weise verteilt sind.

12. Produkt nach einem der vorhergehenden Ansprüche, welches durch ein Verfahren hergestellt ist, welches einen Verfahrensschritt des Gießens aufweist, in eine aus mehreren Teilen bestehende Form und zwar aus einem Bad mit geschmolzenem Material.

13. Produkt nach einem der vorhergehenden Ansprüche, in welchem

$$26\% < MgO < 30\%$$

$$70\% < Al_2O_3 < 74\%$$

in Massenprozenten auf der Basis von Oxyden gilt.

14. Verwendung eines Produktes nach einem der vorhergehenden Ansprüche in einem Regenerator eines Ofens oder als Schichtelement eines unteren Teils einer Schicht eines Regenerators eines Ofens.

15. Verwendung nach dem vorhergehenden Anspruch, bei der der Regenerator mit einem für alk-Natron-Glas Schmelzofen verbunden ist, welcher unter Reduktionsbedingungen funktioniert.

Fig.1

Fig.2

Figure 3

Figure 4

## RÉFÉRENCES CITÉES DANS LA DESCRIPTION

### Documents brevets cités dans la description

- FR 2142624
- FR 2248748
- FR 2635372
- US 2019208 A
- FR 2853897
- FR 1208577
- FR 2058527
- FR 75893
- FR 82310
- EP 0354844 A
- FR 2088185